Europäisches Patentamt

(19) **European Patent Office**

**Office européen des brevets**

(11) Numéro de publication: **0 038 227**
**B1**

(12) **FASCICULE DE BREVET EUROPEEN**

(45) Date de publication du fascicule du brevet:
**01.02.84**

(21) Numéro de dépôt: **81400342.2**

(22) Date de dépôt: **06.03.81**

(51) Int. Cl.³: **B 64 F 5/00,** B 64 D 27/00

(54) Dispositif de mise en place d'un réacteur dans une cellule d'avion.

(30) Priorité: **19.03.80 FR 8006102**

(43) Date de publication de la demande:
**21.10.81 Bulletin 81/42**

(45) Mention de la délivrance du brevet:
**01.02.84 Bulletin 84/5**

(84) Etats contractants désignés:
**DE FR GB**

(56) Documents cités:
**BE - A - 661 260**
**BE - A - 929 322**
**FR - A - 1 398 553**
**FR - A - 1 428 756**
**US - A - 2 783 003**
**US - A - 2 944 331**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Legrand, Paul Joseph, Résidence du Château Avenue des Frênes, F-77530 Vaux le Penil (FR)**
Inventeur: **Notheaux, André Roger, 40, Avenue de Stalingrad, F-91120 Palaiseau (FR)**
Inventeur: **Pachomoff, Guy Robert, 16, Chemin des Longaines, F-91100 Corbeil-Essonnes (FR)**
Inventeur: **Romanoff, Alexis Marcel Gaston, 3, Rue de Gretz, F-77240 Cesson (FR)**

㉔ Mandataire· **Moinat, François et al, S.N.E.C.M.A. Service des Brevets Boîte Postale 81, F-91003 Evry Cedex (FR)**

BUNDESDRUCKEREI BERLIN

Dispositif de mise en place d'un réacteur dans une cellule d'avion

L'invention concerne un dispositif de mise en place d'un réacteur dans une cellule d'avion, ladite cellule comportant des rails de guidage coopérant avec des galets supportant le réacteur.

La mise en place du moteur dans les avions d'armes se fait en général au moyen de quatre galets, disposés sur le moteur et roulant sur deux rails fixés à la cellule. Ce système nécessite un contrôle rigoureux des entr'axes des galets et du parallélisme des rails, afin d'éviter tout coincement ou déraillement lors de la manutention du moteur.

La masse des rails, des galets et des pièces de renfort est relativement importante et réduit d'autant la charge utile de l'appareil.

Le brevet français 1 216 234 décrit un dispositif, permettant le montage ou le démontage d'un réacteur, susceptible de se fixer sur le chariot de transport d'un avion. Ce dispositif est constitué d'un système d'entretoises maintenant deux rails dont l'extrémité est fixée directement dans le caisson annulaire de la cellule d'avion. Ces rails constituent une voie de roulement pour des roulettes montées sur les tourillons de suspension du moteur. Les entretoises soutiennent, en outre, un troisième rail central qui sert de guide à deux galets fixés chacun à un étrier monté, pour la circonstance, à l'avant et à l'arrière du réacteur. Aucune indication n'est donnée en ce qui concerne la mise en place des étriers, et le moment de leur utilisation lors des déplacements du réacteur. Les rails latéraux et le rail central n'étant voisins que sur une faible partie de leur longueur, l'étrier avant semble n'avoir qu'un rôle de support lorsque le réacteur est dans sa position la plus éloignée de la cellule. Seul l'étrier arrière sert de guidage lorsque le réacteur est retiré ou mis en place dans la cellule. Les roulettes coopérant avec les rails latéraux sont montées sur les tourillons de fixation du moteur chaque fois que celui-ci doit être déplacé. Il est nécessaire de prévoir entre les extrémités des tourillons et la cellule une place suffisante pour leur fixation.

L'invention a pour objet un dispositif d'un type comparable à celui décrit dans le brevet précédemment cité mais susceptible de guider et de soutenir le réacteur pendant la totalité de son déplacement sans nécessiter l'utilisation d'engins de levage. Le dispositif permet, en outre, une diminution de masse des rails de guidage prévus dans la cellule et de l'espace compris entre la nacelle et le réacteur.

Le dispositif de mise en place d'un réacteur dans une cellule d'avion, selon l'invention, comportant à l'intérieur des rails de guidage longitudinaux susceptibles de coopérer avec des galets supportant le réacteur, est remarquable en ce qu'il comporte au moins des moyens de déplacement et de présentation du réacteur comprenant au moins deux rails de guidage latéral et un rail de guidage médian inférieur; un berceau avant repliable et amovible portant au moins deux organes de roulement, susceptible d'être fixé à l'avant du réacteur, les deux organes coopérant avec les deux rails de guidage latéral et les rails de guidage longitudinaux fixés dans la cellule; un berceau arrière, amovible, muni d'un autre organe de roulement, susceptible d'être fixé à l'arrière du réacteur, ledit autre organe coopérant avec le rail de guidage médian inférieur; un châssis auquel sont fixés de manière réglable les rails de guidage latéral et médian; des moyens de déplacement vertical du châssis; des moyens de déplacement longitudinal du châssis.

Les explications et figures données ci-après à titre d'exemple, permettront de comprendre comment l'invention peut être réalisée.

La figure 1 représente un exemple de réalisation d'un dispositif de mise en place d'un réacteur dans une cellule d'avion, le réacteur étant présenté derrière la cellule.

La figure 2 montre l'introduction du réacteur dans la cellule.

La figure 3 est une vue en coupe partielle du berceau avant du dispositif.

La figure 4 est une vue en coupe d'un exemple de réalisation des moyens de fixation provisoire du berceau avant.

La figure 5 est un autre exemple de réalisation des moyens de fixation provisoire du berceau avant.

Les figures 6a et 6b sont respectivement une vue en coupe partielle et une vue de dessus des moyens de fixation selon la figure 5.

La figure 7 est une vue du berceau arrière.

La figure 8 est une vue en coupe selon VIII VIII de la figure 7.

La figure 9 est une vue à plus grande échelle du détail A de la figure 1.

La figure 10 est une vue selon X X de la figure 9.

La figure 11 est une vue de l'ensemble chariot de transport dispositif de mise en place.

La figure 12 est une vue à plus grand échelle du détail B de la figure 1.

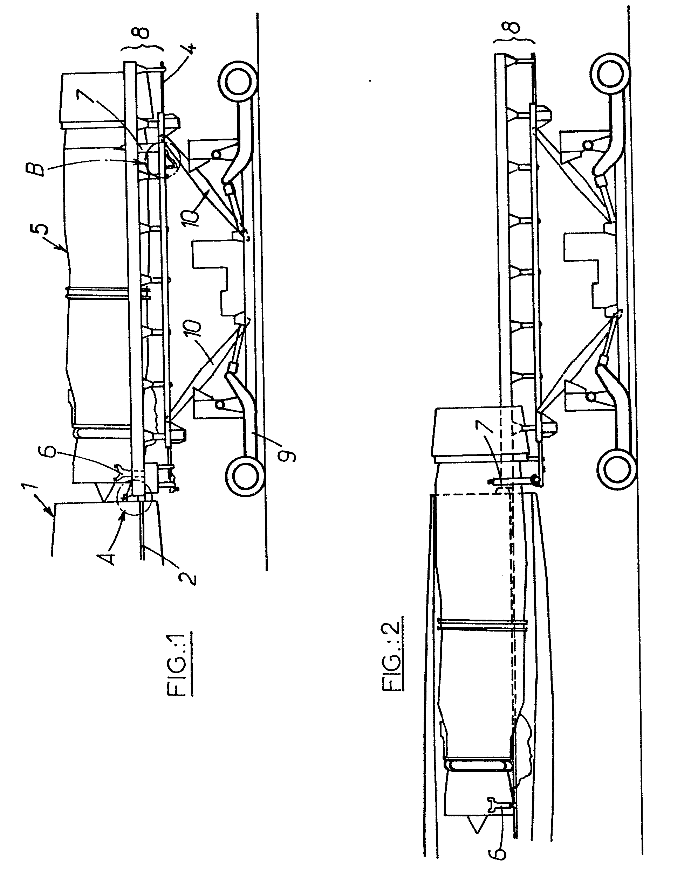

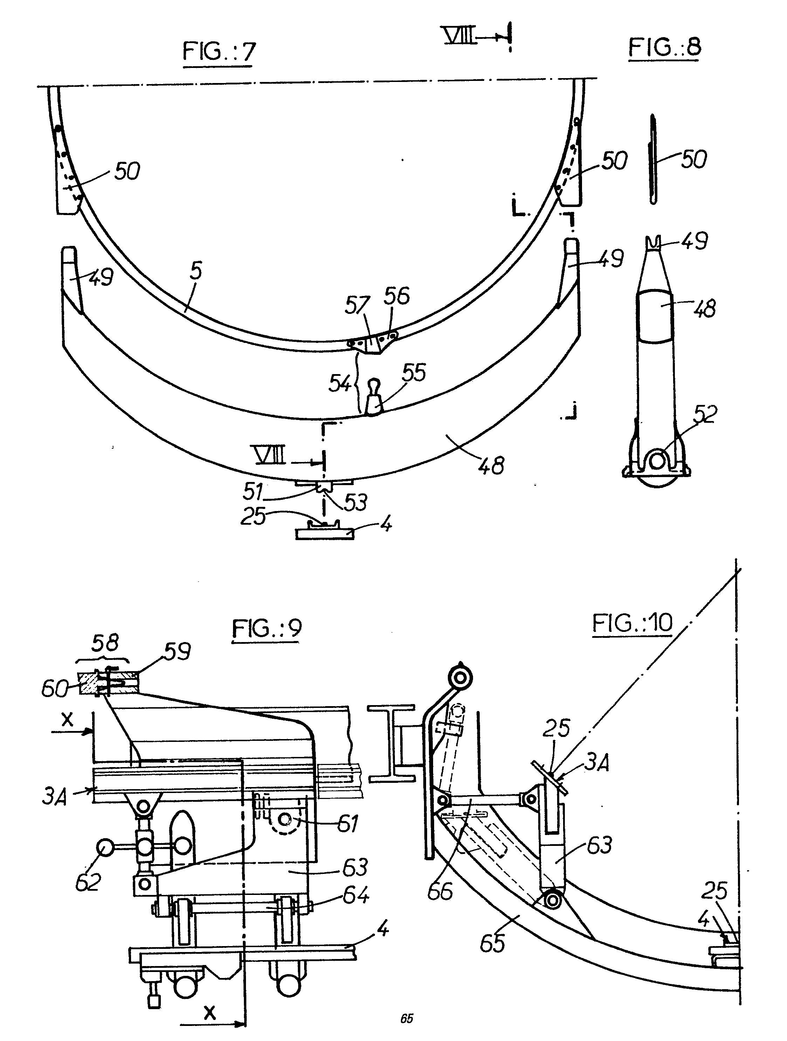

La figure 1 représente, selon l'invention, le dispositif de mise en place d'un réacteur dans une cellule d'avion. Ce dispositif est accolé à la cellule 1 qui porte, à l'intérieur du caisson, deux rails de guidage 2 longitudinaux. Le dispositif comporte des moyens de déplacement et de présentation du réacteur comprenant deux rails latéraux 3 (représentés partiellement en 3A sur les figures 9 et 10) de guidage et un rail 4 de guidage médian. Le réacteur 5 est supporté par deux berceaux: un berceau avant 6 repliable et amovible portant deux organes de roulement susceptibles de coopérer avec les rails latéraux 3 et un berceau arrière 7, amovible, portant un organe de roulement susceptible de coopérer avec le rail médian 4. Les rails (3 et 4) sont fixés de manière réglable à un châssis 8 qui est porté par des moyens de déplacement longitudinal 9 formant chariot. Le chariot comporte également des moyens de déplacement vertical 10 du châssis. Ces moyens permettent d'ajuster avec précision la hauteur du châssis pour faire correspondre, dans le sens vertical, les rails fixés dans la cellule de l'avion avec ceux portés par le châssis.

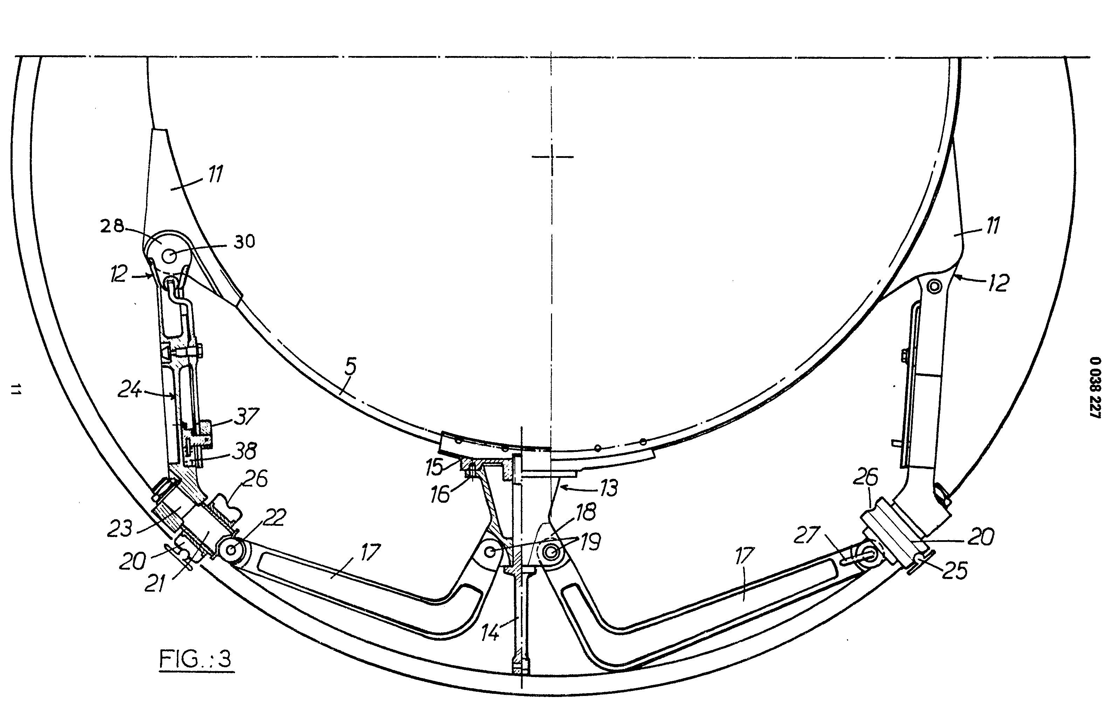

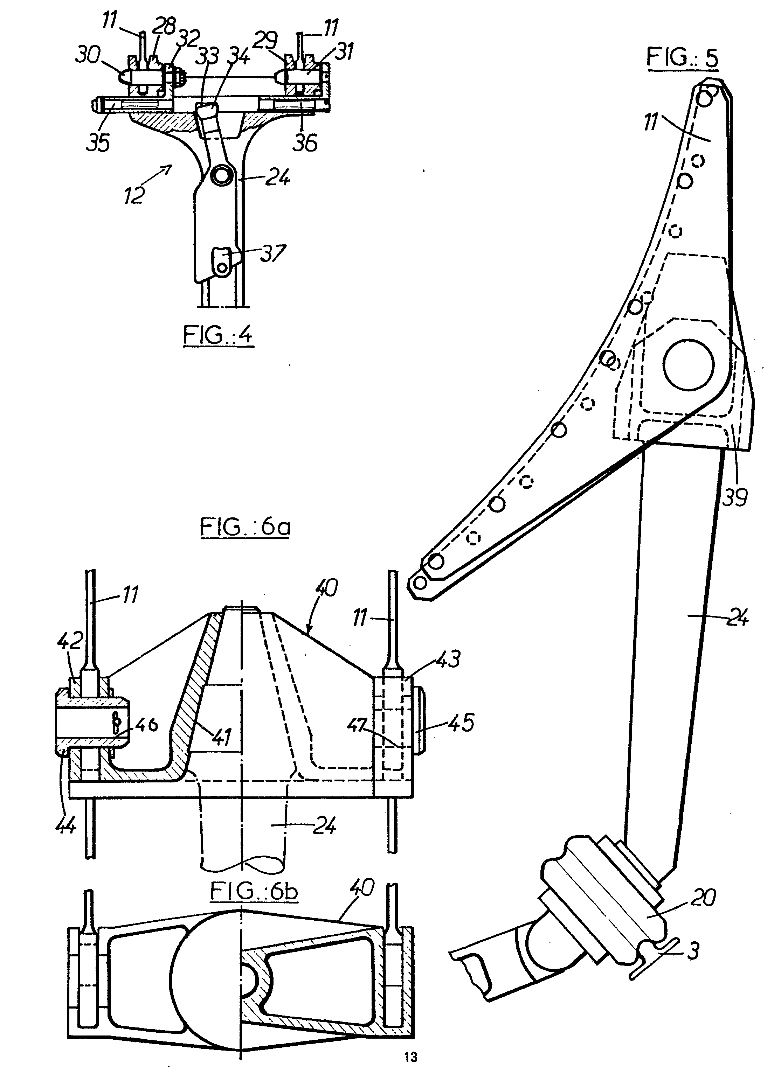

Selon la forme de réalisation du berceau avant représenté figure 3, celui-ci est fixé à des ferrures 11 du carter du réacteur par des dispositifs de fixation provisoire 12 qui sont montrés plus en détail figure 4 et qui seront ultérieurement décrits.

Le berceau avant comporte une pièce centrale 13 susceptible d'être fixée par une broche filetée 14 sur le carter 5 et plus particulièrement sur un support 15 solidaire du carter. Le centrage de la pièce 13 sur le support 15 est assuré par un pion 16. Deux bras 17, disposés symétriquement par rapport à l'axe de la pièce 13, sont articulés sur la pièce centrale par une de leurs extrémités coopérant avec une chape 18 traversée par un axe 19. Les bras sont ainsi mobiles dans un plan diamétral du réacteur. A l'autre extrémité des bras 17 est articulé, par l'intermédiaire d'un axe 22, un organe de roulement 20 mobile autour de l'axe 21; en outre, l'organe de roulement 20 est libre de coulisser axialement sur une extrémité de l'axe 21. Cette disposition permet de rattraper les écarts d'alignement et les déformations des deux rails de guidage. L'autre extrémité de l'axe 21 constitue l'axe de rotation 23 de l'extrémité d'un support 24 rabattable comportant des moyens de fixation provisoire 12 coopérant avec les ferrures 11 du carter.

Selon une forme de réalisation préférée, les rails du dispositif de mise en place et ceux fixés dans la cellule, sont constitués d'un profilé présentant au moins un bourrelet 25. Le bourrelet coopère avec une gorge 26 prévue dans le galet constituant l'organe de roulement 20. Afin d'éviter une déformation latérale du berceau qui aurait pour conséquence le déraillement des galets, lorsque le réacteur est déplacé, on prévoit des moyens de blocage 27 des axes 22. Des moyens de fixation 12 prévus à l'extrémité supérieure du support 24, sont constitués schématiquement d'au moins une chape 28 coopérant avec une ferrure 11 fixée sur le carter et d'une broche 30 traversant la chape et la ferrure. Selon la forme de réalisation représentée figures 3 et 4, l'extrémité supérieure du support 24 porte un verrou 32 en forme de fourchette mû par une gâchette 34 permettant de solidariser le support aux ferrures 11 du carter. La tête du verrou comporte deux chapes 28 et 29 dans lesquelles viennent s'encastrer deux ferrures 11 du carter. Les chapes portent un alésage dans lequel pénètrent les broches de verrouillage 30 et 31. Ces broches sont solidaires d'une fourchette 32. La fourchette comporte un logement 33 dans lequel s'engage une gâchette 34 et deux axes cylindriques 35 et 36 qui coulissent dans des alésages prévus dans la tête de verrou. La gâchette 34 est immobilisée sur le corps du support 24 par un moyen de blocage 37 qui se verrouille dans une encouche de la gâchette sous la poussée d'un ressort 38. La fourchette, solidaire des broches, la gâchette et le moyen de blocage de la gâchette constituent un dispositif de sécurité maintenant en place les moyens de fixation provisoire 12.

Selon une autre forme de réalisation d'un dispositif de fixation provisoire conforme à l'invention, représentée figures 5, 6a et 6b, l'extrémité supérieure du support 24 porte un embout conique mâle 39 susceptible de s'emboîter dans une pièce 40 présentant une cavité 41 de forme conique femelle complémentaire. La pièce comporte de part et d'autre de la cavité deux chapes 42, 43 qui reçoivent les ferrures 11 fixées sur le carter du réacteur 5. Des axes 44 et 45 sont introduits dans des alésages 46 et 47 prévus dans les chapes pour y maintenir les ferrures 11.

Le berceau arrière 7 (figure 1), représenté en détail figure 7, est constitué d'un châssis 48 courbe portant à ses extrémités des moyens supports 49 montrés sur la coupe (figure 8) selon VIII VIII de la figure 7, dans lesquels viennent se placer les ferrures 50 fixées sur le carter de réacteur 5. Le berceau porte à sa partie inférieure un organe de roulement 51 qui tourne dans une chape 52 fixée dans le châssis. L'organe de roulement est, dans l'exemple de réalisation représenté, un galet portant une gorge centrale 53. Cette gorge coopère, comme dans les rails précédents, avec un bourrelet 25 du rail médian 4. Selon une forme de réalisation préférée, les rails 3 et 4 ont une section en U présentant un bourrelet médian. Ce profil permet un double guidage des galets et un ajustage plus facile avec les rails fixés dans la cellule.

Afin de maintenir le berceau dans une position parfaitement définie, on a prévu un dispositif de fixation provisoire 54 constitué d'une colonne à tête sphérique 55 fixée sur la face supérieure du châssis 48 et dans une position proche de son plan de symétrie et d'une pièce 56 fixée sur le carter du réacteur 5 présentant un logement 57 conique.

Lors de la présentation du dispositif de mise en place devant l'entrée de la cellule 1 dans laquelle est logé le réacteur, le châssis est mis à hauteur convenable par les moyens de déplacement vertical 10 et est accouplé fermement à la cellule à l'aide de moyens de verrouillage 58 (voir figure 9). Ces moyens sont constitués, par exemple, d'une douille au moins partiellement cylindrique 59 fixée sur le châssis dans laquelle pénètre un têton 60 appartenant à la cellule. Le têton est maintenu dans la douille par une broche les traversant tous deux.

Afin d'obtenir un positionnement précis des rails du châssis et de ceux fixés dans la cellule, on a prévu des moyens de réglage pour chacun des deux rails latéraux. Les figures 9 et 10 montrent ces moyens de réglage.

Selon la forme de réalisation représentée, les rails latéraux 3 présentent deux tronçons avant 3A indépendants. Chaque tronçon est articulé dans une chape coulissante 61 et réglable en hauteur par le vérin 62. Le tronçon de rail 3A et le vérin 62 sont supportés par une équerre 63, mobile autour d'un axe 64 fixé sur les traverses 65, maintenue en position par une béquille 66. Les tronçons 3A sont rabattus contre les traverses, pour faciliter le passage du berceau arrière, par démontage des béquilles 66. L'équerre 63 et la béquille 66 prennent la position figurée en traits interrompus sur la figure 10.

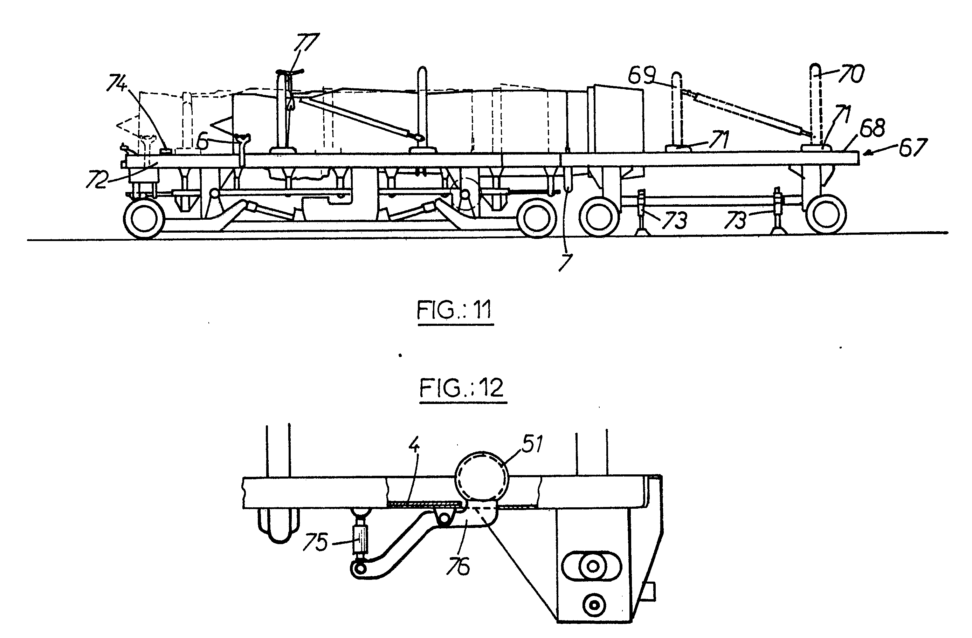

Dans la forme particulière représentée, le réacteur peut être posé sur le dispositif de mise en place par un engin de levage ou peut être poussé sur le dispositif à partir d'un chariot de transport (figure 11). Le chariot de transport 67 est constitué d'un châssis dont les deux poutres horizontales 68 forment une voie de roulement. Des arceaux de suspension 69 et 70 portent des biellettes reliées aux points d'attache normaux du réacteur. Les pieds des portiques supportant les arceaux sont munis de moyens de roulement 71 qui se déplacent sur la voie de roulement 68.

Pour permettre le déplacement du réacteur accroché aux berceaux et sa mise en position sur le chariot, celui-ci est équipé de deux rails de roulement 72 constitués par les poutres horizontales du châssis 8 (figure 1).

Le chariot de transport peut être muni de vérins 73 facilitant la mise en coïncidence des rails du chariot de transport et du chariot de mise en place.

Le procédé de mise en place du réacteur mettant en œuvre le dispositif est décrit ci-après.

Le chariot de mise en place comportant le dispositif, objet de l'invention, est amené à l'arrière de l'avion et verrouillé à se dernier par le dispositif 58 (figure 9). La hauteur au sol du châssis 8 est réglée par le dispositif de déplacement vertical 10. L'ajustage précis des rails de la cellule avec les rails latéraux 3 du chariot est obtenu par réglage du tronçon 3A à l'aide des vérins 62.

Le chariot de transport 67 est accouplé et verrouillé au chariot de mise en place (figure 11) par un dispositif en soi connu. La voie de roulement 68 du chariot de transport est mise dans le prolongement de la voie de roulement 72 du dispositif de mise en place par les vérins 73 qui assurent aussi l'immobilisation. Le réacteur, suspendu auc arceaux 69 et 70, est poussé sur le chariot de mise en place jusqu'aux butées 74.

Au moyen du vérin 77 ou des biellettes réglables fixant le réacteur à l'arceu 69, on peut amener les galets 20 du berceau 6 sur les rails latéraux 3. De même, le vérin 75 (figure 1 détail B et figure 12) permet de mettre en contact le levier 76 avec le galet 51 du berceau arrière 7 et de soutenir provisoirement l'arrière du réacteur pendant qu'on désaccouple du réacteur les biellettes qui le relient à l'arceau support 70. On agira ensuite sur le vérin 75 pour amener l'extrémité du levier 76 à hauteur du rail 4. Le vérin et son levier constituent un dispositif de levage réglable.

On procèdera ensuite au transfert du réacteur dans la cellule.

L'extrémité avant des rails 3A du tronçon articulé des rails 3 étant en coïncidence avec celles de la cellule (par action sur le vérin 62 — figure 9 —), on pousse le réacteur à l'intérieur de l'avion (figures 1 et 2). On rabat latéralement le dispositif articulé pour permettre le passage du berceau arrière 7.

Lorsque le réacteur repose sur les rails de mise en place dans la cellule, il se trouve à quelques millimètres au-dessous de sa position normale. On le hisse en position à l'avant et à l'arrière au moyen d'un dispositif non représenté (rail articulé, vérin, bielle réglable par excentrique, potence amovible etc.).

On procède alors au démontage des berceaux amovibles par des portes de visite.

Le démontage s'effectue de la même manière en inversant l'ordre des opérations.

Bien entendu, la description ci-dessus et les dessins annexés montrent seulement un exemple du dispositif selon lequel l'invention peut être réalisée et on ne sortirait pas du cadre de cette invention en lui substituant des moyens équivalents, notamment en intégrant les fonctions de chariot de transport et de chariot de mise en place dans un seul et unique chariot.

**Revendications**

1. Dispositif de mise en place d'un réacteur dans une cellule d'avion comportant à l'intérieur des rails de guidage longitudinaux susceptibles de coopérer avec des galets supportant le réacteur, ledit dispositif étant caractérisé en ce qu'il comporte au moins des moyens de déplacement et de présentation du réacteur comprenant au moins deux rails de guidage latéral (3) et un rail de guidage médian (4) inférieur; un berceau avant (6) repliable et amovible portant au moins deux organes de roulement (20), susceptible d'être fixé à l'avant du réacteur, les deux organes coopérant avec les deux rails de guidage latéral (3) et les rails de guidage longitudinal (2) fixés dans la cellule; un berceau arrière (7), amovible, muni d'un autre organe de roulement (51), susceptible d'être fixé à l'arrière du réacteur, ledit autre organe coopérant avec le rail de guidage médian inférieur (4); un châssis (8) auquel sont fixés de manière réglable au moins les rails de guidage latéral; des moyens de déplacement vertical (10) du châssis (8); des moyens de déplacement longitudinal (9) du châssis (8).

2. Dispositif selon la revendication 1, caractérisé en ce que le berceau avant (6) comporte une pièce centrale (13) susceptible d'être fixée sur le carter du réacteur (5), par une broche (14); deux bras (17) articulés sur la pièce centrale par une de leurs extrémités symétriquement par rapport à l'axe de ladite pièce; un organe de roulement (20), monté sur un axe (21) dont une extrémité (22) est articulée sur l'autre extrémité des bras (17) et mobile dans le même plan diamétral que les bras, et dont l'autre extrémité (23) de l'axe constitue l'axe de rotation de l'extrémité d'un support (24) comportant des moyens de fixation provisoire (12) avec des ferrures (11) fixées sur le carter du réacteur (5).

3. Dispositif selon la revendication 2, caractérisé en ce que les moyens de fixation provisoire 12 prévu à l'extrémité libre du support comportent au moins une chape (28, 29) coopérant avec une ferrure (11) fixée sur le carter (5), et une broche (30, 31) traversant la chape et la ferrure pour assurer la fixation.

4. Dispositif selon la revendication 2, caractérisé en ce que les moyens de fixation provisoire (12) sont constitués d'un embout conique (39) fixé à l'extrémité libre du support (24) et d'une pièce (40) présentant une cavité (41) de forme complémentaire à celle de l'embout, montée sur au moins une ferrure (11) fixée au carter (5) par des axes (44, 45).

5. Dispositif selon la revendication 3, caractérisé en ce que les moyens de fixation provisoire (12) comportent un dispositif de sécurité constitué d'une fourchette (32) solidaire de la broche (30, 31), d'une gâchette (34) dont une extrémité pénètre dans un logement (33) prévu dans la fourchette (32) et d'un moyen de blocage (37) de la gâchette (34) sur le support (24).

6. Dispositif selon l'une des revendications 1 à 5, caractérisé en ce que le berceau arrière (7) est constitué d'un châssis (48) courbe portant à chaque extrémité des moyens supports (49) dans lesquels se placent des secondes ferrures (50) fixées sur le carter (5); de l'autre organe de roulement (51) prévu à la partie inférieure du châssis; et d'un dispositif de fixation provisoire (54) du berceau sur le carter du réacteur (5).

7. Dispositif selon la revendication 6, caractérisé en ce que le dispositif de fixation provisoire (54) est constitué d'une colonne à tête sphérique (55) fixée sur la face supérieure du châssis (48) courbe et proche du plan de symétrie, coopérant avec un logement (57) prévu dans le carter (5).

8. Dispositif selon l'une des revendications précédentes, caractérisé en ce que le dispositif de mise en place du réacteur comporte des moyens de verrouillage (59) coopérant avec des moyens complémentaires (60) fixés sur la cellule (1).

9. Dispositif selon l'une des revendications précédentes, caractérisé en ce que les deux rails de guidage latéral (3) comportent un tronçon avant (3A) indépendant articulé et réglable en hauteur.

10. Dispositif selon l'une des revendications précédentes, caractérisé en ce que le châssis (8) auquel sont fixés les rails de guidage (3, 4) porte à sa partie supérieure des chemins de roulement (72) sur lesquels sont susceptibles de se déplacer des arceaux de suspension (69, 70) du réacteur pour son transfert d'un chariot de transport (67) au dispositif de mise en place.

11. Dispositif selon l'une des revendications précédentes, caractérisé en ce que les rails (2; 3; 3A; 4) présentent, selon leur axe longitudinal, un bourrelet (25) semi-cylindrique.

12. Dispositif selon l'une des revendications précédentes, caractérisé en ce que les rails de guidage latéral (3) et médian (4) présentent une section en U avec un bourrelet médian (25).

13. Dispositif selon l'une des revendications précédentes, caractérisé en ce que les organes de roulement (20; 51) présentent une surface cylindrique comportant dans un plan transversal médian une gorge (26; 53) à fond arrondi.

14. Dispositif selon l'une des revendications précédentes, caractérisé en ce qu'un dispositif de levage (75; 76) réglable est prévu dans le prolongement et à l'arrière du rail de guidage médian (4).


## Patentansprüche

1. Vorrichtung zum Montieren eines Triebwerks in einer Flugzeugzelle, die in ihrem Inneren längsverlaufende Führungsschienen aufweist, die mit das Triebwerk tragenden Rollen zusammenwirken, dadurch gekennzeichnet, daß mindestens eine Einrichtung zum Bewegen und zum Aufstellen des Triebwerks vorgesehen ist, die mindestens zwei seitliche Führungsschienen (3) sowie eine untere, in der Mitte liegende Führungsschiene (4) aufweist; ferner einen zurückklappbaren und bewegbaren vorderen Motorträger (6), der mit mindestens zwei Laufwerken (20) versehen und vorn an dem Triebwerk anbringbar ist, wobei die beiden Laufwerke mit den beiden seitlichen Führungsschienen (3) und den in der Zelle befestigten, längsverlaufenden Führungsschienen (2) zusammenwirken; ferner einen bewegbaren, mit einem weiteren Laufwerk (51) versehenen hinteren Motorträger (7), der hinten an dem Triebwerk anbringbar ist, wobei das weitere Laufwerk mit der unteren, in der Mitte liegenden Führungsschiene (4) zusammenwirkt; ein Fahrgestell (8), an dem zumindest die seitlichen Führungsschienen verstellbar angebracht sind; weiter eine Einrichtung (10) zum Bewegen des Fahrgestells (8) in vertikaler Richtung und schließlich eine Einrichtung (9) zum Bewegen des Fahrgestells (8) in Längsrichtung.

2. Vorrichtung nach Anspruch 1, dadurch gekennzeichnet, daß der vordere Motorträger (6) ein Mittelstück (13) aufweist, das an dem Triebwerksgehäuse (5) mit Hilfe einer Welle (14) befestigbar ist, ferner zwei an das Mittelstück mit Hilfe ihres einen Endes symmetrisch zu der Achse des Mittelstücks angelenkte Arme (17), ein Laufwerk (20), das an einer Achse (21) angebracht ist, deren eines Ende (22) an dem anderen Ende des Arms (17) angelenkt ist und sich in der gleichen Durchmesserebene bewegen läßt wie die Arme, und deren anderes Ende (23) die Drehachse des Endes einer Stütze (24) bildet, die eine provisorische Befestigungseinrichtung (12) mit Beschlägen (11) aufweist, die an dem Triebwerksgehäuse (5) befestigt sind.

3. Vorrichtung nach Anspruch 2, dadurch gekennzeichnet, daß die am freien Ende der Stütze vorgesehene provisorische Befestigungseinrichtung (12) mindestens eine Abdeckung (28, 29) aufweist, die mit einem Beschlag (11) zusammenwirkt, der an dem Gehäuse (5) befestigt ist, sowie eine Welle (30, 31) die die Abdeckung und den Beschlag durchsetzt, um die Befestigung zu bewirken.

4. Vorrichtung nach Anspruch 2, dadurch gekennzeichnet, daß die provisorische Befestigungseinrichtung (12) aus einem konischen Ansatzstück (39), das an dem freien Ende der Stütze (24) befestigt ist, und einem Bauteil (40) besteht, das einen Hohlraum (41) aufweist, dessen Gestalt komplementär zu der Gestalt des Ansatzstückes ist, und das an mindestens einem Beschlag (11) angebracht ist, der mit dem Achsbolzen (44, 45) an dem Gehäuse (5) befestigt ist.

5. Vorrichtung nach Anspruch 3, dadurch gekennzeichnet, daß die provisorische Befestigungseinrichtung (12) eine Sicherheitseinrichtung aufweist, die aus einem mit der Welle (30, 31) starr verbundenen Bügel (32), einer Zuhaltung (34), deren eines Ende in eine in dem Bügel (32) vorgesehene Ausnehmung (33) eingreift, und einer Einrichtung (37) zum Blockieren der Zuhaltung (34) an der Stütze (24) besteht.

6. Vorrichtung nach einem der Ansprüche 1 bis 5, dadurch gekennzeichnet, daß der hintere Motorträger (7) aus einem gebogenen Untergestell (48) besteht, das an jedem seiner Enden Abstützeinrichtungen (49) aufweist, in die an dem Gehäuse (5) befestigte zweite Beschläge (50) eingreifen, dem weiteren Laufwerk (51) am unteren Teil des Untergestells und einer Vorrichtung (54) für die provisorische Befestigung des Trägers an dem Triebwerksgehäuse (5).

7. Vorrichtung nach Anspruch 6, dadurch gekennzeichnet, daß die Vorrichtung (54) zum provisorischen Befestigen durch einen Kugelkopfständer (55) gebildet wird, der an der Oberseite des gebogenenen Untergestells (48) und nahe der Symmetrieebene befestigt ist und mit einer in dem Gehäuse (5) vorgesehenen Ausnehmung (57) zusammenwirkt.

8. Vorrichtung nach einem der vorhergehenden Ansprüche, dadurch gekennzeichnet, daß die Vorrichtung zum Montieren des Triebwerks eine Verriegelungseinrichtung (59) aufweist, die mit einer an der Zelle (1) befestigten komplementären Einrichtung (60) zusammenwirkt.

9. Vorrichtung nach einem der vorhergehenden Ansprüche, dadurch gekennzeichnet, daß die beiden seitlichen Führungsschienen (3) ein vorderes selbständiges Teilstück (3A) aufweisen, das angelenkt und höhenverstellbar ist.

10. Vorrichtung nach einem der vorhergehenden Ansprüche, dadurch gekennzeichnet, daß das Fahrgestell (8), an welchem die Führungsschienen (3, 4) befestigt sind, an seinem oberen Teil Rollbahnen (72) aufweist, auf denen sich Bügel (69, 70) zum Tragen des Triebwerks bewegen lassen, um dieses von einem Transportwagen (67) auf die Montiervorrichtung zu überführen.

11. Vorrichtung nach einem der vorhergehenden Ansprüche, dadurch gekennzeichnet, daß die Schienen (2, 3, 3A, 4) in Längsachsenrichtung einen halbzylindrischen Wulst (25) aufweisen.

12. Vorrichtung nach einem der vorhergehenden Ansprüche, dadurch gekennzeichnet, daß die seitlichen Führungsschienen (3) und mittleren Führungsschienen (4) U-Querschnitt und einen mittleren Wulst (25) aufweisen.

13. Vorrichtung nach einem der vorhergehenden Ansprüche, dadurch gekennzeichnet, daß die Laufwerke (20, 51) eine Zylinderfläche mit einer Rille (26, 53) mit ausgerundetem Boden in einer Transversalebene besitzen.

14. Vorrichtung nach einem der vorhergehenden Ansprüche, dadurch gekennzeichnet, daß eine verstellbare Hebevorrichtung (75, 76) in der Verlängerung der und hinter der mittleren Führungsschiene (4) vorgesehen ist.

## Claims

1. Device for mounting an engine on an aircraft frame comprising, internally, longitudinal guide rails capable of cooperating with bearings supporting the engine, the said device being characterised in this that it comprises at least displacement and presentation means of the engine including at least two lateral guide rails (3) and a lower median guide rail (4); a front, foldable, detachable, cradle (6) carrying at least two roller members (20), capable of being fixed to the front of the engine, the two members cooperating with the two lateral guide rails (3) and the longitudinal guide rails (2) secured within the frame; a rear detachable, cradle (7), provided with another roller member (51), capable of being fixed to the rear of the engine, the said other member, cooperating with the lower median guide rail (4); a chassis (8) to which are secured in an adjustable manner at least the lateral guide rails; vertical displacement means (10) of the chassis (8); longitudinal displacement means (9) of the chassis (8).

2. Device according to claim 1, characterised in this that the front cradle (6) comprising a central part (13) capable of being secured to the casing of the engine (5), by a strut (14); two arms (17) pivoted on the central part at one of their ends symmetrically with respect to the axis of the said part; a roller member (20), mounted on a pin (21) of which one end (22) is pivoted on the other end of the arm (17) and movable in the same dimetral plane as the arms, and of which the other end (23) of the pin constitutes the axis of rotation of the end of a support (24) comprising temporary securing means (12) with shoes (11) secured to the engine casing (5).

3. Device according to claim 2, characterised in this that the temporary securing means 12 provided at the free end of the support comprise at least one clevis (28, 29) cooperating with one shoe (11) secured to the casing (5), and a pin (30, 31) traversing the clevis and the shoe in order to provide the securing.

4. Device according to claim 2, characterised in this that the temporary securing means (12) are constituted by a conical metal sheath (39) secured to the free end of the support (24) and a part (40) having a vacity (41) of a shape complementary to that of the sheath, mounted on at least one shoe (11) secured to the casing (5).

5. Device according to claim 3, characterised in this that the temporary securing means (12) comprise a security device constituted by a forked member (32) rigid with the pin (30, 31) by a latch (34) of which one end penetrates into a recess (33) provided in the forked member (32) and blocking means (37) of the latch (34) on the support (24).

6. Device according to one of claims 1 to 5, characterised in this that the rear cradle (7) is constituted by a curved frame (48) carrying at each end support means (49) in which there are disposed second shoes (50) secured to the casing (5); by the other roller member (51) provided on the lower part of the frame; and by a temporary securing device (54) of the cradle on the casing of the reactor (5).

7. Device according to claim 6, characterised in this that the temporary securing device (54) is constituted by a column with a spherical head (55) secured on the upper face of the curved frame (48) and adjacent the plane of symmetry, cooperating with a recess (57) in the casing (5).

8. Device according to one of the preceding claims, characterised in this that the device for mounting an engine comprises locking means (59) cooperating with complementary means (60) secured to the airframe (1).

9. Device according to one of the preceding claims characterised in this that the two lateral guide rails (3) comprise a front section (3A) which is independently pivoted and adjustable in height.

10. Device according to one of the preceding claims characterised in this that the chassis (8) to which are secured the guide rails (3, 4) carries at the upper part rolling tracks (72) on which can be mounted for displacement suspension arcs (69, 70) of the engine for its transfer from a transport trolley (67) to the mounting device.

11. Device according to one of the preceding claims characterised in this that the rails (2; 3; 3A; 4) habe along their longitudinal axis, a semi-cylindrical pad (25).

12. Device according to one of the preceding claims characterised in this that the lateral (3) and median (4) guide rails have a U-section with a median pad (25).

13. Device according to one of the preceding claims characterised in this that roller members (20; 51) have a cylindrical surface including in a transverse median plane, a groove (26; 53) with a rounded bottom.

14. Device according to one of the preceding claims characterised in this that a lifting device (75; 76) which is adjustable is provided in the extension and to the rear of the median guide rail (4).

FIG.:1

FIG.:2

FIG.:3

FIG.:4

FIG.:5

FIG.:6a

FIG.:6b

FIG.:7

FIG.:8

FIG.:9

FIG.:10

FIG.: 11

FIG.: 12